# EUROPEAN PATENT SPECIFICATION

(11) **EP 4 541 800 B1**
(45) Date of publication and mention of the grant of the patent: **05.08.2026**
(21) Application number: 24201316.7
(22) Date of filing: 19.09.2024
(51) Int. Cl.: C07F 7/08, C07F 7/10, C07F 7/18

(54) **NITROGEN-CONTAINING SILANE COMPOUND AND METHOD FOR PRODUCING SAME**
STICKSTOFFHALTIGE SILANVERBINDUNG UND VERFAHREN ZUR HERSTELLUNG DAVON
COMPOSÉ DE SILANE CONTENANT DE L'AZOTE ET SON PROCÉDÉ DE PRODUCTION

(30) Priority: 17.10.2023 JP 2023179019
(43) Date of publication of application: 23.04.2025
(73) Proprietor: Shin-Etsu Chemical Co., Ltd., Chiyoda-ku, Tokyo 1000005 (JP)
(72) Inventor: TONOMURA, Yoichi, Joetsu-shi (JP)
(74) Representative: Mewburn Ellis LLP

(56) References cited:
- EP-A1- 2 787 031

## Description

### TECHNICAL FIELD

The present invention relates to a novel nitrogen-containing silane compound and a method for producing the same.

### BACKGROUND

Conventionally, various attempts have been made to improve the properties of a polymer compound, and as one example thereof, a method of introducing a functional group into a polymer compound is known.

As one of the functional group introduction methods, a method is known in which a compound having both a double bond and a functional group is reacted with a monomer to introduce a functional group into a polymer compound. For example, Patent Document 1 proposes a method using 1-[{{N,N-bis (trimethylsilylamine)}dimethylsilyl}-2-{(4-vinylphenyl)dimethylsilyl}ethane, and Patent Document 2 proposes a method using 6-(N,N-bistrimethylsilylamino)myrcene.

It is known that when a polymer compound into which a functional group is introduced as described above is used in a rubber composition for tires, the interaction with silica which is a main filler in the rubber composition is improved.

### Citation List

| | |
|---|---|
| Patent Document 1: | JP-A 2018-513897 |
| Patent Document 2: | JP-A 2022-519481 |
| Patent Document 3: | EP 2787031 A1 |

### SUMMARY OF INVENTION

In the method of Patent Document 1, a highly reactive Si-N bond is introduced into a polymer compound and bonded to a silanol group on the silica surface via a siloxane bond, thereby improving the affinity between the polymer and silica, but there is room for further improvement in the dispersibility of silica.

On the other hand, in the method of Patent Document 2, since the functional group to be introduced is an amino group, silica can be dispersed by the hydrogen bond of the amino group, and at the same time, the interaction with silica itself increases due to the high polarity of the amino group, so that the functional group introduction effect is high, but since the conjugated diene structure in which the double bond part is substituted is obtained, the reactivity at the time of introduction of the functional group decreases, and there is a possibility that the functional group cannot be sufficiently introduced into the polymer compound.

Patent Document 3 discloses a rubber composition achieving balanced improvements in fuel economy, wet-grip performance, abrasion resistance, and handling stability, and a pneumatic tire including the composition. The rubber composition includes a rubber component including at least 95% by mass of conjugated diene polymers having a Tg of - 75-0°C and a Mw of 1.5×10 5 -1.5×10 6, the rubber component (100% by mass) including 5-65% by mass of SBR (A) having a styrene content of at least 5% by mass but less than 15% by mass and a vinyl bond content of 10-70 mol%, and 20-75% by mass of SBR (B) having a styrene content of at least 15% by mass but less than 30% by mass and a vinyl bond content of 10-70 mol%, the composition including, per 100 parts by mass of the rubber component, 1-30 parts by mass of a low-molecular-weight conjugated diene polymer having a Tg of-75-0°C and a Mw of at least 1.0×10 3 but less than 1.5×10 5, and 10-150 parts by mass of silica having a N 2 SA of 40-400 m 2 /g, the composition having a tan peak temperature of at least -20°C.

The present invention has been made in view of the above circumstances, and it is an object of the present invention to provide a novel nitrogen-containing silane compound useful as a polymer modifier, which makes it possible to more effectively improve the characteristics of a polymer compound by introduction of a functional group, and a method for producing the same.

As a result of intensive studies to achieve the above object, the present inventors have found that a specific nitrogen-containing silane compound is useful as a modifier capable of more effectively improving the interaction between silica and a polymer compound and improving the dispersibility of silica, and have completed the present invention.

That is, the present invention provides:
1. A nitrogen-containing silane compound as set out according to the claims.
2. A method for producing the nitrogen-containing silane compound as set out according to the claims.

### ADVANTAGEOUS EFFECTS

The nitrogen-containing silane compound of the present invention is useful as a polymer modifier or the like because it can more effectively improve the interaction between silica and a polymer and improve the dispersibility of silica.

### BRIEF DESCRIPTION OF DRAWINGS

FIG. 1 is a ¹H-NMR spectrum of 4-[(3-diethylaminopropyl)dimethoxysilyl]styrene obtained in Example 1;
FIG. 2 is an IR spectrum of 4-[(3-diethylaminopropyl)dimethoxysilyl] styrene obtained in Example 1;
FIG. 3 is a ¹H-NMR spectrum of 4-[[3-(4-methylpiperazine-1-yl)propyl]-dimethoxysilyl]styrene obtained in Example 2;
FIG. 4 is an IR spectrum of 4-[[3-(4-methylpiperazine-1-yl)propyl]dimethoxysilyl]-styrene obtained in Example 2;
FIG. 5 is a ¹H-NMR spectrum of 1-[4-[(3-diethylaminopropyl)dimethoxysilyl]-phenyl]-1-phenylethylene obtained in Example 3; and
FIG. 6 is an IR spectrum of 1-[4-[(3-diethylaminopropyl)dimethoxysilyl]-phenyl]-1-phenylethylene obtained in Example 3.

### FURTHER EXPLANATIONS; OPTIONS AND PREFERENCES

The nitrogen-containing silane compound of the present invention is a compound having the following general formula (1) (Hereinafter, the compound is referred to as "compound (1)".).

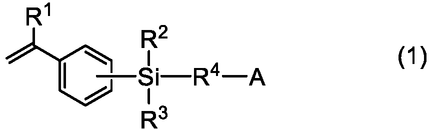

In the general formula (1), R¹ is a hydrogen atom or an unsubstituted monovalent hydrocarbon group having 1 to 20 carbon atoms, preferably 1 to 10 carbon atoms, more preferably 1 to 6 carbon atoms.

The monovalent hydrocarbon group of R¹ may be linear, branched, or cyclic, and specific examples thereof include linear alkyl groups such as methyl, ethyl, n-propyl, n-butyl, n-pentyl, n-hexyl, n-heptyl, n-octyl, n-nonyl, n-decyl, n-dodecyl, n-tetradecyl, n-hexadecyl, n-octadecyl, and n-icosyl groups; branched alkyl groups such as isopropyl, isobutyl, sec-butyl, tert-butyl, thexyl, 2-ethylhexyl groups; cyclic alkyl groups such as cyclopentyl and cyclohexyl groups; alkenyl groups such as vinyl, allyl, 1-propenyl, 1-butenyl, and 1-pentenyl groups; aryl groups such as phenyl, tolyl, and xylyl groups; aralkyl groups such as benzyl and phenethyl groups.

Among them, R¹ is preferably a hydrogen atom, an unsubstituted linear, branched or cyclic alkyl group having 1 to 10 carbon atoms, an unsubstituted linear, branched or cyclic alkenyl group having 2 to 10 carbon atoms, an unsubstituted aryl group having 6 to 10 carbon atoms, or an unsubstituted aralkyl group having 7 to 10 carbon atoms, and from the viewpoint of easy availability of raw materials, a hydrogen atom, a methyl group, or a phenyl group is more preferable.

In the general formula (1), R² and R³ are each independently
an organoxy group having the following general formula (2) .

-OR⁵ (2)

In the formula (2), R⁵ is an unsubstituted monovalent hydrocarbon group having 1 to 20 carbon atoms. Examples of the monovalent hydrocarbon group of R², R³, and R^{S} include the same group as R¹.

In the general formula (1), R⁴ is an unsubstituted divalent hydrocarbon group having 1 to 20 carbon atoms, preferably 1 to 10 carbon atoms, more preferably 1 to 5 carbon atoms, and specific examples thereof include an alkylene group such as a methylene, ethylene, methylethylene, trimethylene, methylpropylene, tetramethylene, hexamethylene, octamethylene, decamethylene, or isobutylene group; arylene groups such as phenylene and methylphenylene groups; and aralkylene groups such as ethylenephenylene and ethylenephenylenemethylene groups.

In a case where R⁴ is a single bond and A is a group having the general formula (3), when the compound (1) is used as the polymer modifier, the N-Si bond is cleaved by hydrolysis or the like, the amino group contained in A is removed from the polymer, and the interaction between the polymer compound and silica is lost. On the other hand, when an unsubstituted divalent hydrocarbon group having 1 to 20 carbon atoms is present as in the present invention, amino group removal by cleavage does not occur even after use as the polymer modifier, and an amino group having a large interaction with silica can be retained in the polymer, so that the interaction between the polymer compound and silica can be increased.

In the general formula (1), A is a group having the following general formula (3) or the following general formula (4).

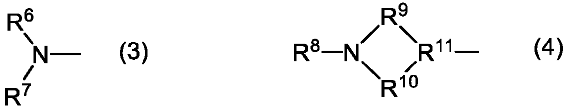

In the general formula (3), R⁶ and R⁷ are a monovalent hydrocarbon group having 1 to 20 carbon atoms, preferably 1 to 10 carbon atoms, more preferably 1 to 6 carbon atoms, in which a hetero atom such as an oxygen atom or a sulfur atom may be interposed, or a triorganosilyl group.

The monovalent hydrocarbon group of R⁶ and R⁷ may be linear, branched, or cyclic, and specific examples thereof include linear alkyl groups such as methyl, ethyl, n-propyl, n-butyl, n-pentyl, n-hexyl, n-heptyl, n-octyl, n-nonyl, n-decyl, n-dodecyl, n-tetradecyl, n-hexadecyl, n-octadecyl, and n-icosyl groups; branched alkyl groups such as isopropyl, isobutyl, sec-butyl, tert-butyl, thexyl, 2-ethylhexyl groups; cyclic alkyl groups such as cyclopentyl and cyclohexyl groups; alkenyl groups such as vinyl, allyl, propenyl, 1-butenyl, and 1-pentenyl groups; aryl groups such as phenyl, tolyl, and xylyl groups; aralkyl groups such as benzyl and phenethyl groups .

Among them, R⁶ and R⁷ are preferably a hydrogen atom, an unsubstituted linear, branched or cyclic alkyl group having 1 to 10 carbon atoms, an unsubstituted linear, branched or cyclic alkenyl group having 2 to 10 carbon atoms, an unsubstituted aryl group having 6 to 10 carbon atoms, or an unsubstituted aralkyl group having 7 to 10 carbon atoms, and from the viewpoint of easy availability of raw materials, a hydrogen atom, a methyl group, or a phenyl group is more preferable.

R⁶ and R⁷ may be bonded to each other to form a ring having 2 to 20 carbon atoms together with the nitrogen atom to which they are bonded.

Examples of such a ring include a piperidine ring, a piperazine ring, a pyrrolidine ring, and a morpholine ring.

Specific examples of the triorganosilyl group include trialkylsilyl groups having an alkyl group having 1 to 6 carbon atoms, such as trimethylsilyl, ethyldimethylsilyl, diethylmethylsilyl, triethylsilyl, tri n-propylsilyl, triisopropylsilyl, tri n-butylsilyl, triisobutylsilyl, tri sec-butylsilyl, tert-butyldimethylsilyl, tricyclopentylsilyl, and tricyclohexylsilyl groups; a triarylsilyl group having an aryl group having 6 to 10 carbon atoms, such as a triphenylsilyl group; and an alkyldiarylsilyl group having an alkyl group having 1 to 6 carbon atoms and an aryl group having 6 to 10 carbon atoms such as a tert-butyldiphenylsilyl group.

In the general formula (4), R⁸ is an unsubstituted monovalent hydrocarbon group having 1 to 20 carbon atoms, preferably 1 to 10 carbon atoms, more preferably 1 to 5 carbon atoms, or a triorganosilyl group, and specific examples thereof include groups similar to R⁶ and R⁷.

R⁹ and R¹⁰ each independently represent an unsubstituted divalent hydrocarbon group having 1 to 20 carbon atoms, preferably 1 to 10 carbon atoms, more preferably 1 to 5 carbon atoms, and specific examples thereof include an alkylene group such as a methylene, ethylene, methylethylene, trimethylene, methylpropylene, tetramethylene, hexamethylene, octamethylene, decamethylene, or isobutylene group; arylene groups such as phenylene and methylphenylene groups; and aralkylene groups such as ethylenephenylene and ethylenephenylenemethylene groups.

R¹¹ represents C-H or a nitrogen atom.

Specific examples of the compound (1) include
4-(dimethylaminomethyldimethoxysilyl)styrene,
4-(diethylaminomethyldimethoxysilyl)styrene,
4-(dibutylaminomethyldimethoxysilyl)styrene,
4-[(N,N-bistrimethylsillyl)aminomethyldimethoxysilyl]styrene,
4-(morpholinomethyldimethoxysilyl)styrene,
4-[(4-methylpiperazine-1-yl)methyldimethoxysilyl]styrene,
4-[(3-dimethylaminopropyl)dimethoxysilyl]styrene,
4-[(3-diethylaminopropyl)dimethoxysilyl]styrene,
4-[(3-dibutylaminopropyl)dimethoxysilyl]styrene,
4-[3-[(N,N-bistrimethylsilyl)aminopropyl]dimethoxysilyl]styrene,
4-[(3-morpholinopropyl)dimethoxysilyl]styrene,
4-[[3-(4-methylpiperazine-1-yl)propyl]dimethoxysilyl]styrene,
4-(dimethylaminomethyldiethoxysilyl)styrene,
4-(diethylaminomethyldiethoxysilyl)styrene, 4-(dibutylaminomethyldiethoxysilyl)styrene,
4-[(N,N-bistrimethylsilyl)aminomethyldiethoxysilyl]styrene,
4-(morpholinomethyldiethoxysilyl)styrene,
4-[(4-methylpiperazine-1-yl)methyldiethoxysilyl]styrene,
4-[(3-dimethylaminopropyl)diethoxysilyl]styrene,
4-[(3-diethylaminopropyl)diethoxysilyl]styrene,
4-[(3-dibutylaminopropyl)diethoxysilyl]styrene,
4-[3-[(N,N-bistrimethylsilyl)aminopropyl]diethoxysilyl]styrene,
4-[(3-morpholinopropyl)diethoxysilyl]styrene,
4-[[3-(4-methylpiperazine-1-yl)propyl]diethoxysilyl]styrene,
3-(dimethylaminomethyldimethoxysilyl)styrene,
3-(diethylaminomethyldimethoxysilyl)styrene,
3-(dibutylaminomethyldimethoxysilyl)styrene,
3-[(N,N-bistrimethylsilyl)aminomethyldimethoxysilyl]styrene,
3-(morpholinomethyldimethoxysilyl)styrene,
3-[(4-methylpiperazine-1-yl)methyldimethoxysilyl]styrene,
3-[(3-dimethylaminopropyl)dimethoxysilyl]styrene,
3-[(3-diethylaminopropyl)dimethoxysilyl]styrene,
3-[(3-dibutylaminopropyl)dimethoxysilyl]styrene,
3-[3-[(N,N-bistrimethylsilyl)aminopropyl]dimethoxysilyl]styrene,
3-[(3-morpholinopropyl)dimethoxysilyl]styrene,
3-[[3-(4-methylpiperazine-1-yl)propyl]dimethoxysilyl]styrene,
3-(dimethylaminomethyldiethoxysilyl)styrene,
3-(diethylaminomethyldiethoxysilyl)styrene,
3-[(N,N-bistrimethylsilyl)aminomethyldiethoxysilyl]styrene,
3-(dibutylaminomethyldiethoxysilyl)styrene, 3-(morpholinomethyldiethoxysilyl)styrene,
3-[(4-methylpiperazine-1-yl)methyldiethoxysilyl]styrene,
3-[(3-dimethylaminopropyl)diethoxysilyl]styrene,
3-[(3-diethylaminopropyl)diethoxysilyl]styrene,
3-[(3-dibutylaminopropyl)diethoxysilyl]styrene,
3-[3-[(N,N-bistrimethylsilyl)aminopropyl]diethoxysilyl]styrene,
3-[(3-morpholinopropyl)diethoxysilyl]styrene,
3-[[3-(4-methylpiperazine-1-yl)propyl]diethoxysilyl]styrene,
2-(dimethylaminomethyldimethoxysilyl)styrene,
2-(diethylaminomethyldimethoxysilyl)styrene,
2-(dibutylaminomethyldimethoxysilyl)styrene,
2-[(N,N-bistrimethylsilyl)aminomethyldimethoxysilyl]styrene,
2-(morpholinomethyldimethoxysilyl)styrene,
2-[(4-methylpiperazine-1-yl)methyldimethoxysilyl]styrene,
2-[(3-dimethylaminopropyl)dimethoxysilyl]styrene,
2-[(3-diethylaminopropyl)dimethoxysilyl]styrene,
2-[(3-dibutylaminopropyl)dimethoxysilyl]styrene,
2-[3-[(N,N-bistrimethylsilyl)aminopropyl]dimethoxysilyl] styrene,
2-[(3-morpholinopropyl)dimethoxysilyl]styrene,
2-[[3-(4-methylpiperazine-1-yl)propyl]dimethoxysilyl]styrene,
2-(dimethylaminomethyldiethoxysilyl)styrene,
2-(diethylaminomethyldiethoxysilyl)styrene, 2-(dibutylaminomethyldiethoxysilyl)styrene,
2-[(N,N-bistrimethylsilyl)aminomethyldiethoxysilyl]styrene,
2-(morpholinomethyldiethoxysilyl)styrene,
2-[[(4-methylpiperazine-1-yl)methyldiethoxysilyl]styrene,
2-[(3-dimethylaminopropyl)diethoxysilyl]styrene,
2-[(3-diethylaminopropyl)diethoxysilyl]styrene,
2-[(3-dibutylaminopropyl)diethoxysilyl]styrene,
2-[3-[(N,N-bistrimethylsilyl)aminopropyl]diethoxysilyl]styrene,
2-[(3-morpholinopropyl)diethoxysilyl]styrene,
2-[[3-(4-methylpiperazine-1-yl)propyl]diethoxysilyl]styrene,
1-[4-(dimethylaminomethyldimethoxysilyl)phenyl]-1-phenylethylene,
1-[4-(diethylaminomethyldimethoxysilyl)phenyl]-1-phenylethylene,
1-[4-(dibutylaminomethyldimethoxysilyl)phenyl]-1-phenylethylene,
1-[4-[(N,N-bistrimethylsilyl)aminomethyldimethoxysilyl]phenyl]-1-phenylethylene,
1-[4-(morpholinomethyldimethoxysilyl)phenyl]-1-phenylethylene,
1-[4-[(4-methylpiperazine-1-yl)methyldimethoxysilyl]phenyl]-1-phenylethylene,
1-[4-[(3-dimethylaminopropyl)dimethoxysilyl]phenyl]-1-phenylethylene,
1-[4-[(3-diethylaminopropyl)dimethoxysilyl]phenyl]-1-phenylethylene,
1-[4-[(3-dibutylaminopropyl)dimethoxysilyl]phenyl]-1-phenylethylene,
1-[4-[3-[(N,N-bistrimethylsilyl)aminopropyl]dimethoxysilyl]phenyl]-1-phenylethylene,
1-[4-[(3-morpholinopropyl)dimethoxysilyl]phenyl]-1-phenylethylene,
1-[4-[[3-(4-methylpiperazine-1-yl)propyl]dimethoxysilyl]phenyl]-1-phenylethylene,
1-[4-(dimethylaminomethyldiethoxysilyl)phenyl]-1-phenylethylene,
1-[4-(diethylaminomethyldiethoxysilyl)phenyl]-1-phenylethylene,
1-[4-(dibutylaminomethyldiethoxysilyl)phenyl]-1-phenylethylene,
1-[4-[(N,N-bistrimethylsilyl)aminomethyldiethoxysilyl]phenyl]-1-phenylethylene,
1-[4-(morpholinomethyldiethoxysilyl)phenyl]-1-phenylethylene,
1-[4-[(4-methylpiperazin-1-yl)methyldiethoxysilyl]phenyl]-1-phenylethylene,
1-[4-[(3-dimethylaminopropyl)diethoxysilyl]phenyl]-1-phenylethylene,
1-[4-[(3-diethylaminopropyl)diethoxysilyl]phenyl]-1-phenylethylene,
1-[4-[(3-dibutylaminopropyl)diethoxysilyl]phenyl]-1-phenylethylene,
1-[4-[3-[(N,N-bistrimethylsilyl)aminopropyl]diethoxysilyl]phenyl]-1-phenylethylene,
1-[4-[(3-morpholinopropyl)diethoxysilyl]phenyl]-1-phenylethylene, and
1-[4-[[3-(4-methylpiperazine-1-yl)propyl]diethoxysilyl]phenyl]-1-phenylethylene.

Next, a method for producing the compound (1) of the present invention is described.

The compound (1) can be produced, for example, by reacting a nitrogen-containing silane compound (Hereinafter, the compound is referred to as "compound (5)".) having the following general formula (5) with a Grignard reagent having the following general formula (6) (Hereinafter, the compound is referred to as "compound (6)".). 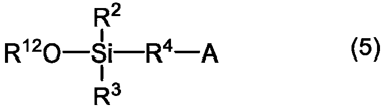 wherein, R² to R⁴ and A represent the same meaning as described above, and R¹² represents an unsubstituted monovalent hydrocarbon group having 1 to 20 carbon atoms. 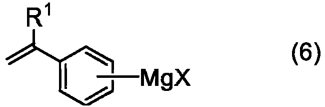 wherein, R¹ has the same meaning as described above, and X represents a chlorine atom, a bromine atom, or an iodine atom.

Specific examples of the compound (5) include dimethylaminomethyltrimethoxysilane, diethylaminomethyltrimethoxysilane, dibutylaminomethyltrimethoxysilane, (N,N-bistrimethylsilyl)aminomethyltrimethoxysilane, morpholinomethyltrimethoxysilane, (4-methylpiperazine-1-yl)methyltrimethoxysilane, (3-dimethylaminopropyl)trimethoxysilane, (3-diethylaminopropyl)trimethoxysilane, (3-dibutylaminopropyl)methyltrimethoxysilane, 3-[(N,N-bistrimethylsilyl)aminopropyl]trimethoxysilane, (3-morpholinopropyl)trimethoxysilane, 3-[(4-methylpiperazine-1-yl)propyl]trimethoxysilane, dimethylaminomethyltriethoxysilane, diethylaminomethyltriethoxysilane, dibutylaminomethyltriethoxysilane, (N,N-bistrimethylsilyl)aminomethyltriethoxysilane, morpholinomethyltriethoxysilane, (4-methylpiperazine-1-yl)methyltriethoxysilane, (3-dimethylaminopropyl)triethoxysilane, (3-diethylaminopropyl)triethoxysilane, (3-dibutylaminopropyl)triethoxysilane, 3-[(N,N-bistrimethylsilyl)aminopropyl]triethoxysilane, (3-morpholinopropyl)triethoxysilane, 3-[(4-methylpiperazine-1-yl)propyl]triethoxysilane .

Specific examples of the compound (6) include 4-styrylmagnesium chloride, 4-styrylmagnesium bromide, 4-styrylmagnesium iodide, 3-styrylmagnesium chloride, 3-styrylmagnesium bromide, 3-styrylmagnesium iodide, 2-styrylmagnesium chloride, 2-styrylmagnesium bromide, 2-styrylmagnesium iodide, 4-(1-phenylvinyl)phenylmagnesium chloride, 4-(1-phenylvinyl)phenylmagnesium bromide, and 4-(1-phenylvinyl)phenylmagnesium iodide.

The compounding ratio of the compound (5) and the compound (6) is not particularly limited, but from the viewpoint of reactivity and productivity, the compounding ratio of the compound (6) is preferably 0.1 to 3.0 mol, more preferably 0.5 to 2 mol, per 1 mol of the compound (5).

The reaction temperature of the above reaction is not particularly limited, but is preferably -40 to 200°C, more preferably 0 to 150°C, and the reaction time is not particularly limited, but is preferably 1 to 40 hours, more preferably 1 to 20 hours. The reaction atmosphere is preferably an inert gas atmosphere such as nitrogen or argon.

The above reaction proceeds even without a solvent, but a solvent can also be used. Examples of the solvent include hydrocarbon solvents such as pentane, hexane, cyclohexane, heptane, isooctane, benzene, toluene, and xylene; ether solvents such as diethyl ether, tetrahydrofuran, and dioxane; ester solvents such as ethyl acetate and butyl acetate; aprotic polar solvents such as acetonitrile, N,N-dimethylformamide, and N-methylpyrrolidone; and chlorinated hydrocarbon solvents such as dichloromethane and chloroform. These solvents may be used singly or in combination of two or more kinds thereof.

From the reaction solution obtained as described above, the target product can be recovered by a usual method such as distillation or distillation of a low-boiling-point compound.

### EXAMPLES

Hereinafter, the present invention is specifically described with reference to Examples, but the present invention is not limited to the following Examples but defined by the claims.

### Example 1

A flask equipped with a stirrer, a reflux condenser, a dropping funnel, and a thermometer was charged with 23.5 g (0.1 mol) of (3-diethylaminopropyl)trimethoxysilane and 30 ml of toluene, 43 g of a tetrahydrofuran solution of 4-styrylmagnesium chloride (0.1 mol) was added dropwise at 20 to 30°C over 1 hour, and the mixture was stirred at that temperature for 1 hour. The reaction solution was filtered, and then the filtrate was distilled to obtain 14.1 g of a fraction having a boiling point of 151 to 153°C/0.3 kPa.

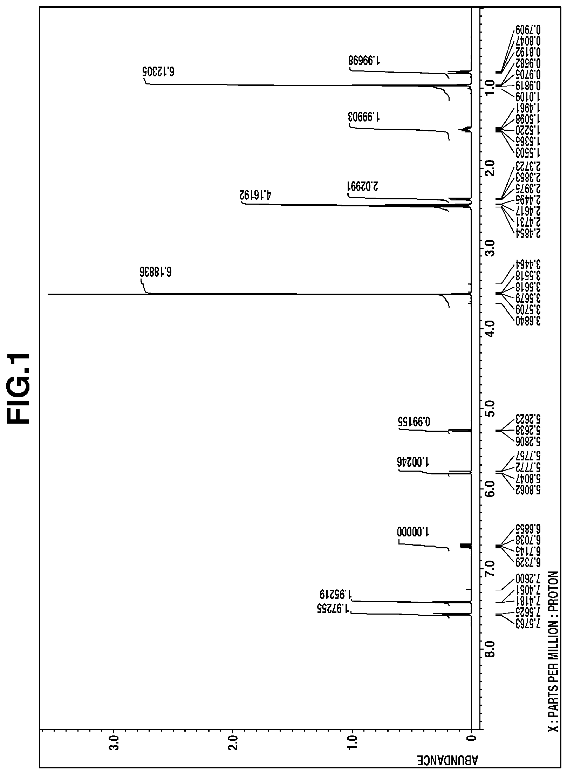

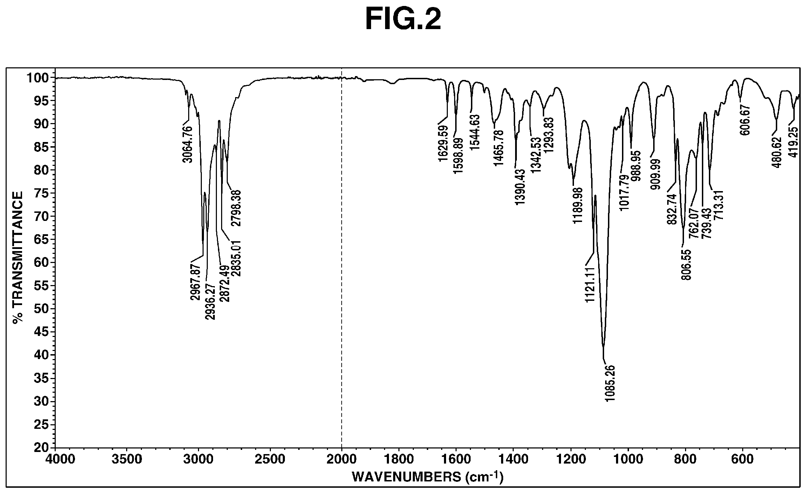

A mass spectrum, a ¹H-NMR spectrum, and an IR spectrum of the obtained fraction were measured. From these results, it was confirmed that the obtained compound was 4-[(3-diethylaminopropyl)dimethoxysilyl]styrene.
[Mass spectrum]
   m/z 307, 193, 163, 133, 117, 86
[¹H-NMR spectrum (deuterated chloroform solvent)]
   FIG. 1 shows a chart.
[IR spectrum]
   FIG. 2 shows a chart.

### Example 2

A flask equipped with a stirrer, a reflux condenser, a dropping funnel, and a thermometer was charged with 26.2 g (0.1 mol) of
3-[(4-methylpiperazine-1-yl)propyl]-trimethoxysilane and 30 ml of toluene, and 43 g of a tetrahydrofuran solution of 4-styrylmagnesium chloride (0.1 mol) was added dropwise at 20 to 30°C over 1 hour and stirred at that temperature for 1 hour. The reaction solution was filtered, and then the filtrate was distilled to obtain 5.0 g of a fraction having a boiling point of 168 to 169°C/0.2 kPa.

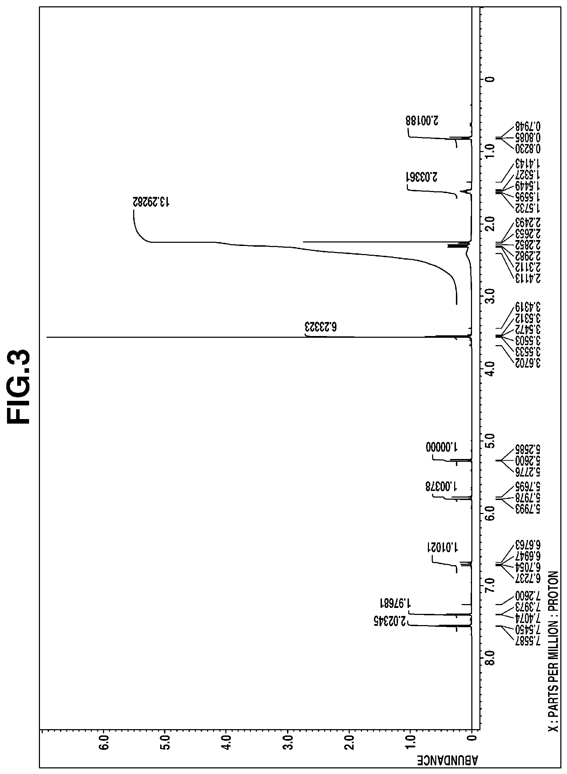

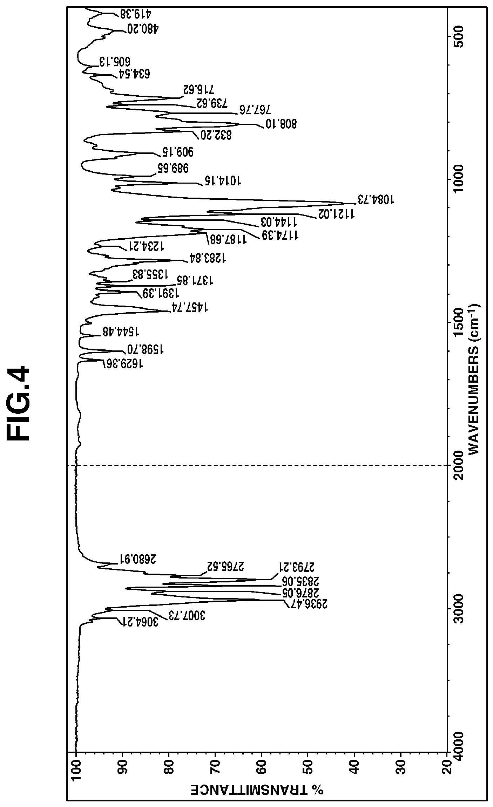

A mass spectrum, a ¹H-NMR spectrum, and an IR spectrum of the obtained fraction were measured. From these results, it was confirmed that the obtained compound was 4-[[3-(4-methylpiperazine-1-yl)propyl]dimethoxysilyl]styrene.
[Mass spectrum]
   m/z 334, 193, 163, 133, 113, 70
[¹H-NMR spectrum (deuterated chloroform solvent)]
   FIG. 3 shows a chart.
[IR spectrum]
   FIG. 4 shows a chart.

### Example 3

A flask equipped with a stirrer, a reflux condenser, a dropping funnel, and a thermometer was charged with 23.5 g (0.1 mol) of (3-diethylaminopropyl)trimethoxysilane and 30 ml of toluene, 50 g of a tetrahydrofuran solution of 4-(1-phenylvinyl)phenylmagnesium chloride (0.1 mol) was added dropwise at 20 to 30°C over 1 hour, and the mixture was stirred at that temperature for 1 hour. The reaction solution was filtered, and then the filtrate was distilled to obtain 15.3 g of a fraction having a boiling point of 174 to 177°C/0.03 kPa.

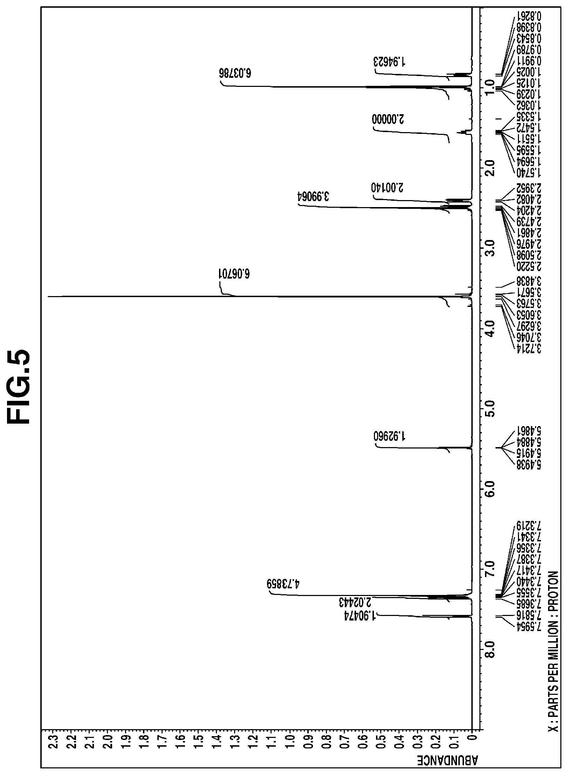

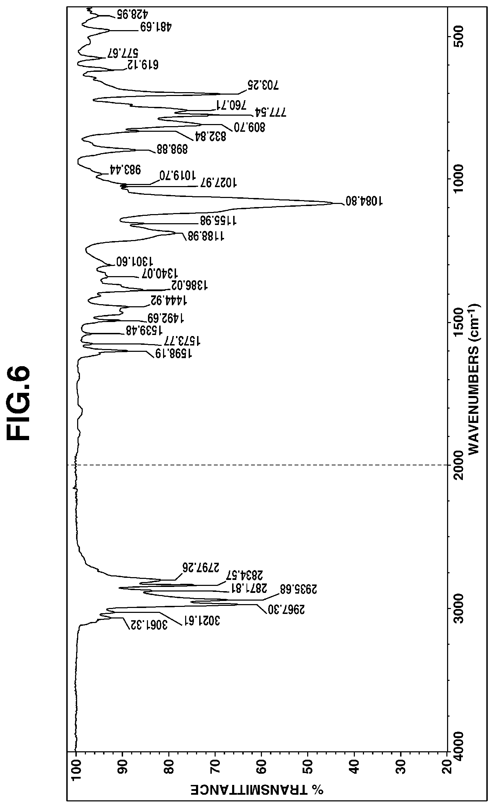

A mass spectrum, a ¹H-NMR spectrum, and an IR spectrum of the obtained fraction were measured. From these results, it was confirmed that the obtained compound was 1-[4-[(3-diethylaminopropyl)dimethoxysilyl]phenyl]-1-phenylethylene.
[Mass spectrum]
   m/z 383, 269, 239, 193, 174, 86
[¹H-NMR spectrum (deuterated chloroform solvent)]
   FIG. 5 shows a chart.
[IR spectrum]
   FIG. 6 shows a chart.

## Claims

1. A nitrogen-containing silane compound having the following general formula (1): 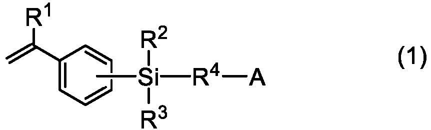
wherein R¹ represents a hydrogen atom or an unsubstituted monovalent hydrocarbon group having 1 to 20 carbon atoms,
R² and R³ each independently represent a group having the following general formula (2):
-OR⁵ (2)
wherein, R⁵ represents an unsubstituted monovalent hydrocarbon group having 1 to 20 carbon atoms,
R⁴ represents an unsubstituted divalent hydrocarbon group having 1 to 20 carbon atoms,
A represents a group having the following general formula (3) or a group having the following general formula (4): 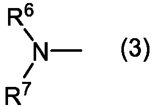
wherein, R⁶ and R⁷ represent a monovalent hydrocarbon group having 1 to 20 carbon atoms in which a hetero atom may be interposed or a triorganosilyl group, and may be bonded to each other to form a ring having 2 to 20 carbon atoms together with a nitrogen atom to which they are bonded: 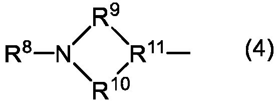
wherein, R⁸ represents an unsubstituted monovalent hydrocarbon group having 1 to 20 carbon atoms or a triorganosilyl group, R⁹ and R¹⁰ each independently represent a divalent hydrocarbon group having 1 to 20 carbon atoms, and R¹¹ represents C-H or a nitrogen atom.

2. A method for producing the nitrogen-containing silane compound according to claim 1, comprising reacting
a nitrogen-containing silane compound having the following general formula (5): 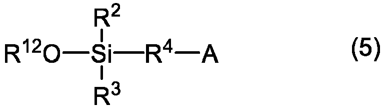 wherein, R² to R⁴ and A represent the same meaning as described above, and R¹² represents an unsubstituted monovalent hydrocarbon group having 1 to 20 carbon atoms with
a Grignard reagent having the following general formula (6): 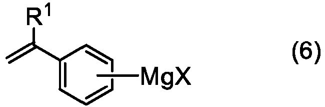 wherein, R¹ has the same meaning as described above, and X represents a chlorine atom, a bromine atom, or an iodine atom.

## Patentansprüche

1. Stickstoffhältige Silanverbindung, welche die folgende allgemeine Formel (1) aufweist: 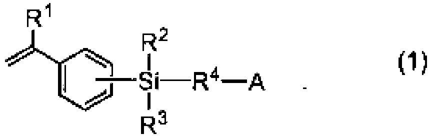
worin R¹ für ein Wasserstoffatom oder eine unsubstituierte einwertige Kohlenwasserstoffgruppe mit 1 bis 20 Kohlenstoffatomen steht,
R² und R³ jeweils unabhängig für eine Gruppe stehen, welche die folgende allgemeine Formel (2) aufweist:
-OR⁵ (2)
worin R⁵ für eine unsubstituierte einwertige Kohlenwasserstoffgruppe mit 1 bis 20 Kohlenstoffatomen steht,
R⁴ für eine unsubstituierte zweiwertige Kohlenwasserstoffgruppe mit 1 bis 20 Kohlenstoffatomen steht,
A für eine Gruppe der folgenden allgemeinen Formel (3) oder eine Gruppe der folgenden allgemeinen Formel (4) steht: 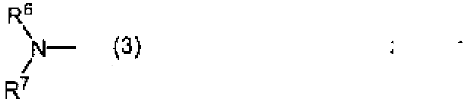
worin R⁶ und R⁷ für eine einwertige Kohlenwasserstoffgruppe mit 1 bis 20 Kohlenstoffatomen, in der ein Heteroatom enthalten sein kann, oder eine Triorganosilylgruppe stehen, die gegebenenfalls miteinander verbunden sein können, um zusammen mit dem Stickstoffatom, an das sie gebunden sind, einen Ring mit 2 bis 20 Kohlenstoffatomen zu bilden: 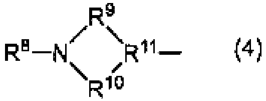
worin R⁸ für eine unsubstituierte einwertige Kohlenwasserstoffgruppe mit 1 bis 20 Kohlenstoffatomen oder eine Triorganosilylgruppe steht, R⁹ und R¹⁰ jeweils unabhängig für eine zweiwertige Kohlenwasserstoffgruppe mit 1 bis 20 Kohlenstoffatomen stehen und R¹¹ für C-H oder ein Stickstoffatom steht.

2. Verfahren zur Herstellung einer stickstoffhältigen Silanverbindung nach Anspruch 1, welches das Umsetzen
einer stickstoffhältigen Silverbindung der folgenden allgemeinen Formel (5): 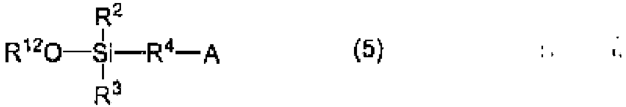 worin R² bis R⁴ und A dieselbe Bedeutung wie oben beschrieben aufweisen und R¹² für eine unsubstituierte einwertige Kohlenwasserstoffgruppe mit 1 bis 20 Kohlenstoffatomen steht,
mit einem Grignard-Reagens der nachfolgenden allgemeinen Formel (6): 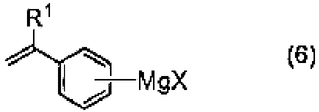
worin R¹ dieselbe Bedeutung wie oben beschrieben aufweist und X für ein Chloratom, ein Bromatom oder ein lodatom steht,
umfasst.

## Revendications

1. Composé de silane contenant de l'azote présentant la formule générale (1) suivante : 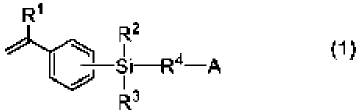
dans laquelle R¹ représente un atome d'hydrogène ou un groupe hydrocarboné monovalent non substitué présentant de 1 à 20 atomes de carbone,
R² et R³ représentent chacun indépendamment un groupe présentant la formule générale (2) suivante :
-OR⁵ (2)
dans laquelle R⁵ représente un groupe hydrocarboné monovalent non substitué présentant de 1 à 20 atomes de carbone,
R⁴ représente un groupe hydrocarboné divalent non substitué présentant de 1 à 20 atomes de carbone,
A représente un groupe présentant la formule générale (3) suivante ou un groupe présentant la formule générale (4) suivante 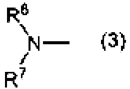
dans laquelle R⁶ et R⁷ représentent un groupe hydrocarboné monovalent présentant de 1 à 20 atomes de carbone dans lequel un hétéroatome peut être interposé ou un groupe triorganosilyle, et peuvent être liés l'un à l'autre pour former un cycle présentant de 2 à 20 atomes de carbone avec un atome d'azote auquel ils sont liés : 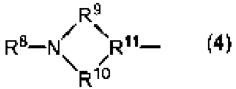
dans laquelle R⁸ représente un groupe hydrocarboné monovalent non substitué présentant de 1 à 20 atomes de carbone ou un groupe triorganosilyle, R⁹ et R¹⁰ représentent chacun indépendamment un groupe hydrocarboné divalent présentant de 1 à 20 atomes de carbone, et R¹¹ représente C-H ou un atome d'azote.

2. Procédé de production du composé de silane contenant de l'azote selon la revendication 1, comprenant l'étape consistant à faire réagir un composé de silane contenant de l'azote présentant la formule générale (5) suivante : 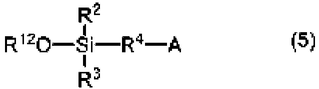
dans laquelle R² à R⁴ et A présentent la même signification que celle décrite ci-dessus, et R¹² représente un groupe hydrocarboné monovalent non substitué présentant de 1 à 20 atomes de carbone avec
un réactif de Grignard présentant la formule générale (6) suivante : 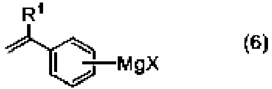
dans laquelle R¹ présente la même signification que celle décrite ci-dessus, et X représente un atome de chlore, un atome de brome ou un atome d'iode.
